# EUROPEAN PATENT SPECIFICATION

(11) **EP 3 390 216 B1**
(45) Date of publication and mention of the grant of the patent: **27.11.2019**
(21) Application number: 16825561.0
(22) Date of filing: 30.11.2016
(51) Int. Cl.: B63B 25/08, F17C 1/00

(54) **MULTIPLE CONTAINMENT UNIT OF COMPRESSED GAS CYLINDERS, IN PARTICULAR FOR MARINE TRANSPORT**
MEHRFACHEINSCHLUSSEINHEIT FÜR DRUCKGASZYLINDER, INSBESONDERE FÜR SEETRANSPORT
UNITÉ DE CONFINEMENT MULTIPLE DE BOUTEILLES DE GAZ COMPRIMÉ, EN PARTICULIER POUR LE TRANSPORT MARITIME

(30) Priority: 18.12.2015 IT UB20159258
(43) Date of publication of application: 24.10.2018
(73) Proprietor: Fincantieri Oil & Gas S.p.A., 34121 Trieste (IT)
(72) Inventor: PROVERA, Roberto, I-34121 Trieste (IT); BATTISTI, Cristiano, I-34121 Trieste (IT)
(74) Representative: Zanettin, Gianluigi
(86) International application number: PCT/IB2016/057215
(87) International publication number: WO 2017/103717

(56) References cited:
- WO-A1-2013/083153
- WO-A1-2015/098069
- CN-A- 105 083 477
- KR-A- 20100 124 546
- US-A- 3 270 700
- US-A1- 2008 164 251
- US-A1- 2010 186 426

## Description

### Field of application

This invention relates to a multiple containment unit of compressed gas cylinders.

The multiple containment unit according to the invention is intended to be installed on a means of transport, and is particularly suitable for the maritime transportation of compressed gas in cylinders. In particular, this multiple containment unit can be installed in the holds of ships or on the decks of barges. This unit can also be installed on submarines or on semi-submersible or floating platforms.

### State of the art

Various applications are known for the transport of compressed gas based on multiple containment units of compressed gas cylinders. These containment units, better known in the jargon as cylinder racks, are contained or installed, for example, in trucks, in containers for highway transport, in the holds of ships, on barges or in wagons for rail transport.

Generally, these multiple containment units or racks are constituted by structures realised by means of modular and repetitive elements, and delimit internally a containment volume in which are disposed and constrained a plurality of pressure vessels (cylinders). In particular, such units are constituted by reticular structures made with metal profiles connected to each other by welding or bolted connections.

Due to how they are made, i.e., rigidly connected by welding or bolted connection, these structures completely absorb the fatigue stresses of the loading and unloading cycles of the compressed gas in the cylinders bound to them and in turn transmit the same stresses induced by the transport means, be it a truck, railway train or a marine vessel.

In particular, when these containment structures are placed inside a cargo hold of a ship, the stresses induced by wave motion absorbed by the hull of the ship itself, are transmitted to the containment unit (rack) of cylinders, with the result of discharging these stresses also on the single cylinders.

In fact, to provide such containment structures (racks) adequate stability, they are bound rigidly to the marine vessel without providing discontinuities in the transmission chain of the forces and are therefore forced to work integrally with the transport means itself.

If the single cylinder were partially released in the rack, albeit in a limited range of values, in the six main directions (linear movements and rotations along the three axes of reference) it would not be subjected to the same stresses as the rack and thus the cylinder would be structurally independent of the structure of the transport means.

In usual naval and mechanical technique, this is not done because to date there is no availability of mechanical connection systems between cylinders and rack that are easy to apply and implement, capable, at the same time, of making the cylinder independent from the deformations of the rack (movements and expansions).

In fact, the cylinders should be mounted in the racks in such a way that the connection between the two elements (cylinder and rack) makes the first element (the cylinder) free to move even if limitedly, while the second element (the rack) is rigidly connected to the hull and without degrees of freedom, but characterised by only a limited capacity of elastic deformation.

The absence of an effective mechanical disconnection system between cylinders and rack impacts heavily on the dimensioning of the cylinders (pressure vessels) themselves. In fact, this dimensioning must be based in particular on the fatigue life of the cylinders, quantifying not only the gas loading and unloading cycles, but also the maximum wave stress transmitted from the structure of the rack to the cylinder. One thus obtains a dimensioning of the cylinders that is heavily dependent on wave load cycles (on the order of 10^6 in 20 years) and not on the gas loading/unloading cycles (on the order of 10^3 in 20 years).

The inability to prevent the transmission of stresses induced by the ship to the rack and thus to the cylinders forces one to consider these stresses in the fatigue life of the single cylinder, and thus to dimension it taking into account the number of cycles of wave loads induced on the ship. This dimensioning design approach results in a significant increase of the costs for cylinders and racks and, at the same time, in the case of limit stresses, can cause damage to the structure of the rack (and the ship itself) linked to the structurally rigid connection. Document US 2010'186'426 A1 proposes a stackable frame containing compressed gas cylinders. The frame is designed to isolate the gas cylinders from ship movement and vibration by providing the corners of the frame with damping elements or bushing.

### Presentation of the invention

Therefore, the purpose of this invention is to eliminate or at least mitigate the drawbacks of the prior art mentioned above, by providing a multiple containment unit being installable in the holds of ships or on the decks of barges, such a multiple containment unit of compressed gas cylinders that can deform freely even under unfavourable sea and wind conditions, in the case of maritime transport, without any significant effect in terms of deformation on the cylinders.

A further purpose of this invention is to make available a multiple containment unit of compressed gas cylinders that is simple and economical to produce.

### Brief description of the drawings

The technical characteristics of the invention, according to the above-mentioned purposes, can be clearly understood from the claims listed below and its advantages will become more apparent from the detailed description that follows, made with reference to the attached drawings, which show one or more purely exemplary and non-limiting embodiments wherein:

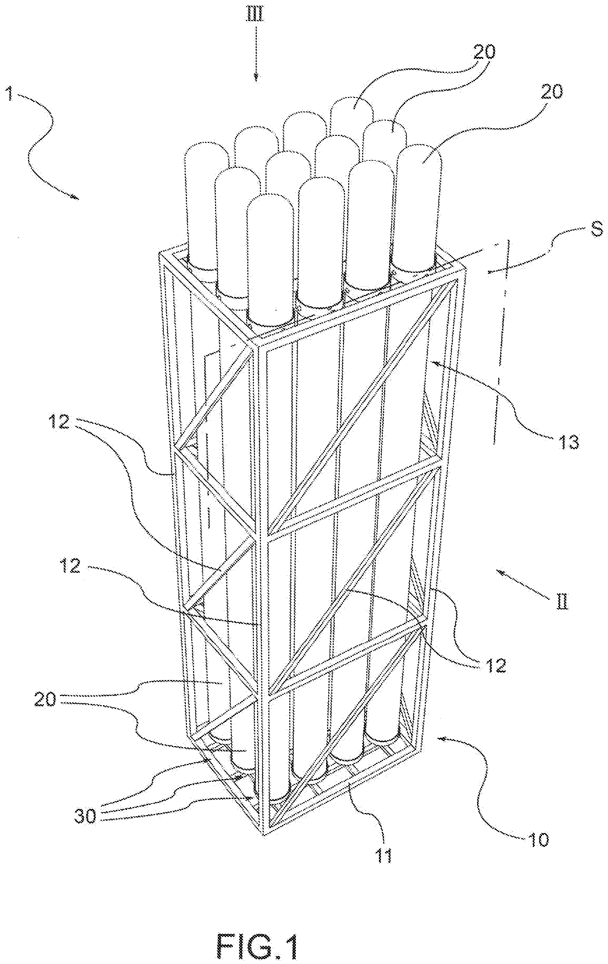

- Figure 1 shows a top perspective view of a multiple containment unit (rack) of CNG cylinders arranged vertically, according to a preferred embodiment of the invention;

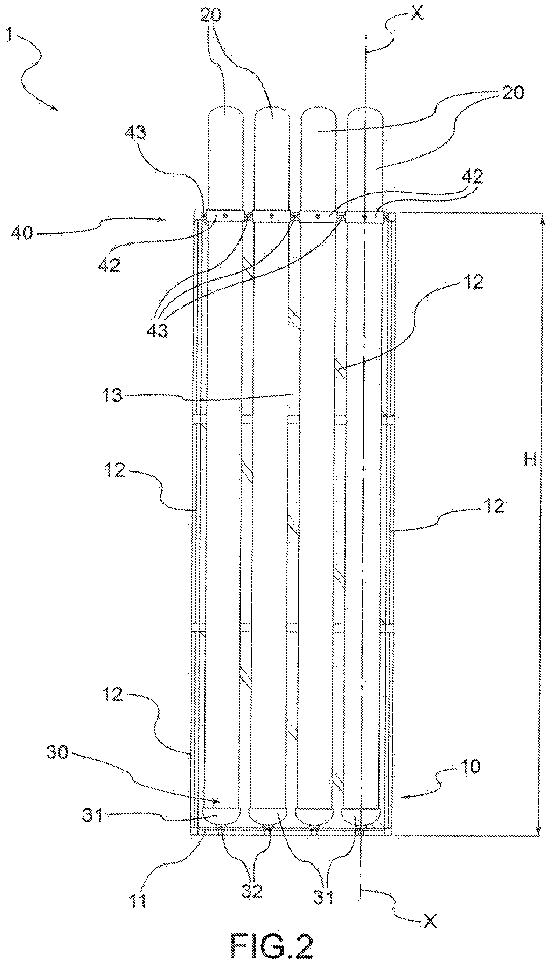

- Figure 2 shows an orthogonal side view in section of the unit illustrated in Figure 1, according to the sectional plane S and the arrow II shown therein;

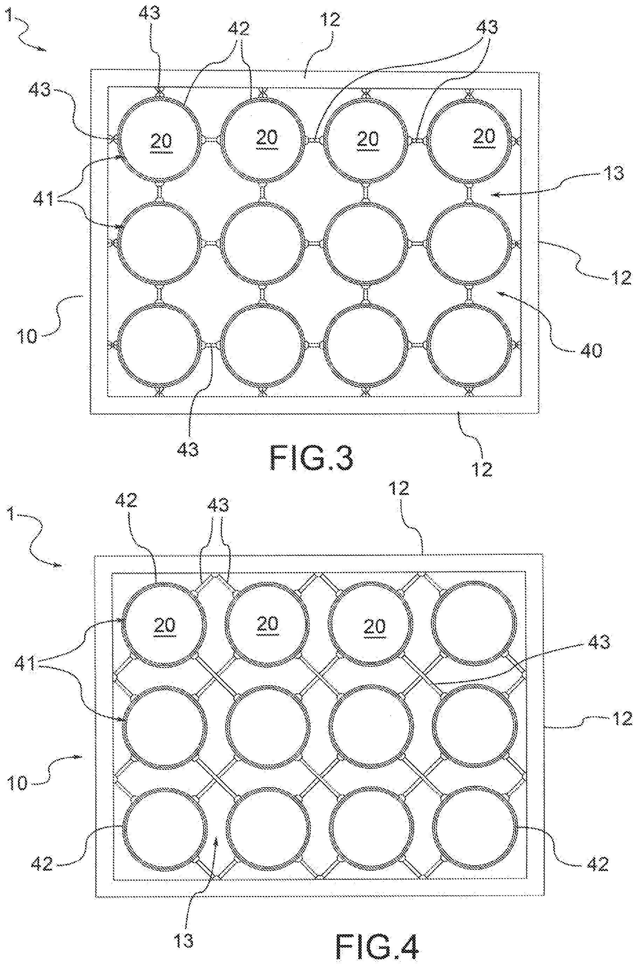

- Figure 3 shows a simplified top plan view of the unit illustrated in Figure 1, according to the arrow III indicated therein;
- Figures 4, 5 and 6 each show a simplified top plan view of three multiple containment units (racks) of CNG cylinders arranged vertically, according to three different embodiments of the invention;
- Figures 7, 8 and 9 each show a detail view of upper connection means between rack and cylinders respectively of Figures 3, 4 and 5;
- Figure 10 shows a detail view of lower connection means between the rack and cylinders, according to a preferred embodiment.
- Figures 11a and 11b respectively show a simplified orthogonal view in vertical and an orthogonal top plan view of the multiple containment unit (rack) illustrated in Figure 1, when the rack is subjected to a deformation of pure translation;
- Figures 12a and 12b respectively show a simplified orthogonal view in vertical and an orthogonal top plan view of the multiple containment unit (rack) illustrated in Figure 1, when the rack is subjected to a deformation of pure flexion; and
- Figures 13a and 13b respectively show a simplified orthogonal view in vertical and an orthogonal top plan view of the multiple containment unit (rack) illustrated in Figure 1, when the rack is subjected to a deformation of pure torsion.

### Detailed description

With reference to the accompanying drawings, reference number 1 indicates, in its entirety, a multiple containment unit (rack) of compressed gas cylinders according to this invention and 20 indicates the single pressure vessels (cylinders) for the transport of compressed gas installed inside the containment unit.

The pressure vessels can be destined to contain any type of compressed gas, in particular compressed natural gas (CNG).

Here and in the rest of the description and claims, reference will be made to the of multiple containment unit (rack) 1 of cylinders in condition of use. References to a lower or higher position, or a horizontal or vertical direction, should be understood in this sense.

The multiple containment unit 1 according to the invention is particularly suitable for the maritime transportation of compressed gas in cylinders. The marine vessel or ship can be of any type. In particular, this multiple containment unit 1 can be installed in the holds of ships or on the decks of barges. This unit 1 can also be installed on submarines or on semi-submersible or floating platforms.

Preferably, the multiple containment unit 1 is installed on a ship or on a barge.

The multiple containment unit 1 according to the invention is therefore a structure intended to be installed on a transport means, in particular a marine vessel, as a separate element, to be connected to the structures of the transport means, which, in the case of a marine vessel, are in particular decks and holds.

According to a general embodiment of the invention illustrated in the accompanying Figures, the multiple containment unit (rack) 1 comprises:
- a support frame 10 comprising in turn a support base 11 and a plurality of side containment structures 12 which are structurally connected to the support base 11 and extend vertically from the latter defining an inner containment volume 13; and
- a plurality of cylinders 20 for containing compressed gas which are arranged vertically along their own longitudinal extension axis X inside said containment volume 13 and are connected to said support frame 10 in order to maintain a stable position therein.

The number of cylinders contained by the unit (rack) 1 can vary depending on the configuration selected for the unit itself.

Advantageously, the aforesaid support frame 10 of the multiple containment unit (rack) 1 can comprise means for connection to a structure of the transport means on which it is to be installed.

According to a first aspect of the invention, each cylinder 20 is connected to the support base 11 through a lower connection device 30 comprising:
- a support element 31 in correspondence of which the cylinder 20 abuts with its own longitudinal bottom end 21; and
- a spherical joint 32 that constrains the support element 31 to the support base 11, allowing the free rotation of the support element 31 and of the cylinder 20 resting on it with respect to the support base 11, but preventing translations thereof with respect to the support base 11 itself.

Thanks to the spherical joint 32, the support element 31 can rotate in the half-space above the support base on all axes. In this rotational movement, the longitudinal extension axis X of the cylinder describes a cone with vertex on the spherical joint. Taking into account the spatial and dimensional constraints imposed by the positioning of the cylinder in the rack and with respect to the other cylinders, the rotation on the spherical joint 32 is limited. Preferably, the rotation is such that the aforesaid cone has an aperture angle of not more than 0.1°. In the case of a cylinder 24 m high, a rotation at the base with an angle of 0.1° imposes on the longitudinal extension axis X of the cylinder a deviation from the vertical, measured at the top of the cylinder in the horizontal component (translation), not more than 50 mm.

According to a further aspect of the invention, the multiple containment unit 1 also comprises a vertical support structure 40 of the cylinders 20 that:
- is bound to the side structures 12 of the frame 10 at a predetermined height H from the support base 11; and
- defines for each single cylinder 20 a vertical positioning seat 41.

Each cylinder 20 is free to translate axially (i.e., along its longitudinal extension axis X) inside the respective vertical positioning seat 41 with respect to the vertical support structure 40.

Operationally, the vertical support structure 40 accompanies the cylinders 20 in the movements of the side structures 12 of the frame, seconding the rotations of each cylinder 20 permitted by the respective lower connection device 30 without transmitting to them bending and/or twisting moments and, at the same time, keeping the cylinders 20 separated from each other according to a predefined positioning plan layout.

This invention therefore provides for connecting each single cylinder 20 to the support frame 10 by means of a mechanical connection system that is composed of two separate support systems, one acting on the bottom portion of the cylinders (i.e., the aforesaid lower connection device 30) and one acting on a portion placed higher up with respect to the bottom (i.e., the aforesaid vertical support structure 40).

The vertical support structure 40 can act at any height of the cylinder, provided that the connection with the cylinder is ensured in the event of the maximum expected axial sliding.

Thanks to the invention, the support frame 10 of the containment unit 1 can deform freely even with unfavourable sea and wind conditions, in the case of maritime transport, without this causing significant effects on the cylinders. In fact, thanks to the invention, the cylinders are free to move with respect to the support frame 10, although keeping them substantially together them according to a predefined positioning plan layout. This is achieved by separating the cylinders 20 from the support frame 10, so as to prevent (or at least significantly limit) the transmission of static and dynamic stresses from the frame 10 to the cylinders 20.

Thanks to the invention, it is thus possible to prevent, over time, overloading of the most rigid element (the cylinder, with gas under pressure), when the most flexible element (the support frame) is deformed following the stresses of the transport means that contains them both.

This advantage becomes evident when the transport means, in the entire duration of its operating life, performs a number of stress cycles so high as to make an adequate dimensioning of the rigid element (cylinder) economically impractical.

The aforesaid support frame 10 of the containment unit 1 is a structure having a stiffness lower than the cylinders 20 arranged in it and is able to deform when it is subjected to dynamic loads imposed by the transport means inside which it is installed.

Preferably, the support frame 10 is a lattice-like structure made of metal sections connected to each other by welding or bolted connections.

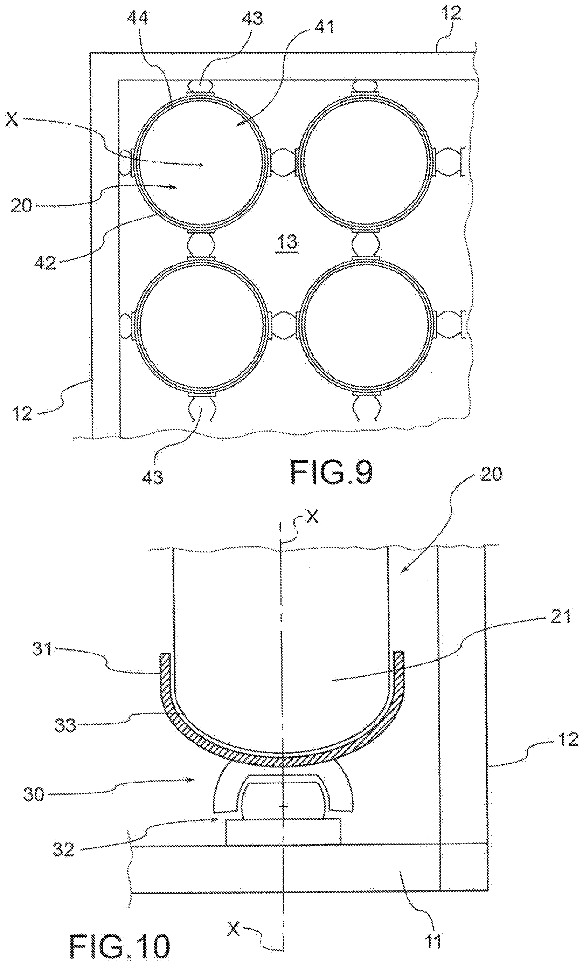

Advantageously, as illustrated in particular in Figure 10, the support element 31 can be shaped so as to define a support seat having a shape corresponding to the shape of the bottom end of the cylinder. In particular, the support element 31 is constituted by a cradle.

Preferably, the support element 31 is made of metallic material.

Advantageously, as illustrated in Figure 10, the lower connection device 30 can comprise a mattress 33 of elastically deformable material interposed between the support element 31 and the bottom end 21 of the cylinder.

This mattress 33 is suitable to dampen any vibrations and/or vertical stresses transmitted by the support frame 10 to the cylinder 20.

Preferably, the elastically deformable material that forms the mattress 33 provides a coefficient of friction with the cylinder 20 sufficient to keep the cylinder 20 resting in the support element 31 in the event of vertical and/or side accelerations received by the cylinder itself.

According to the embodiment illustrated in the accompanying figures, the aforesaid vertical support structure 40 of the cylinders comprises:
- a plurality of collars 42, one for each cylinder 20, each of which defines the positioning seat 41 for the respective cylinder 20; and
- a plurality of spacer elements 43 that connect the collars to each other and to the side structures 12 of the frame 10 positioning the collars between them and with respect to the side structures according to a predetermined positioning plan layout.

Operationally, the aforesaid spacer elements 43 connect the collars 42 to each other and to the side structures 12 of the support frame 10, uncoupling the collars from each other and from the side structures as regards the transmission of bending and/or twisting moments.

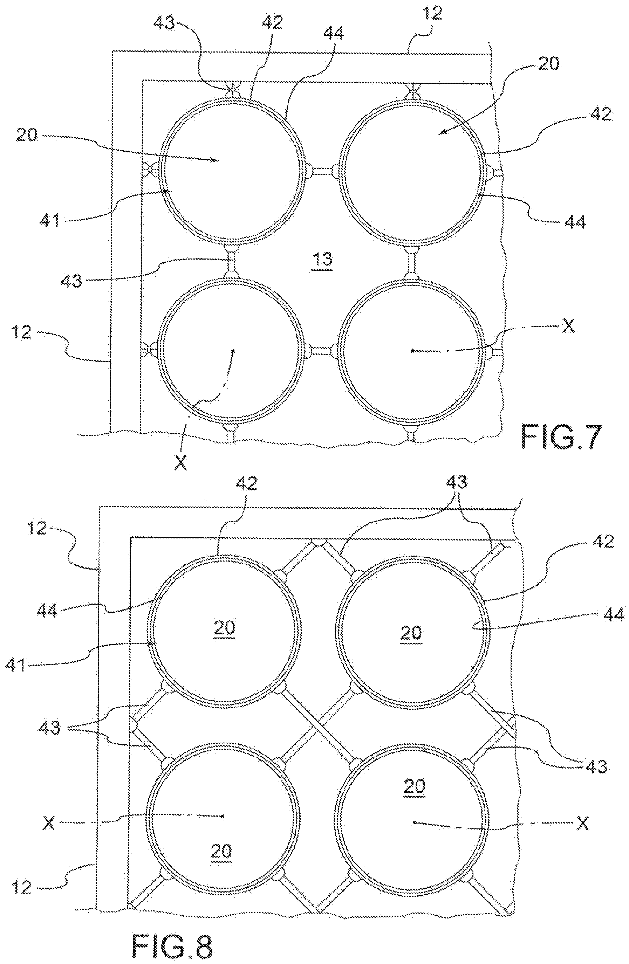

In particular, as illustrated in Figures 7 and 8, each spacer element 43 can be constituted by a double ball joint.

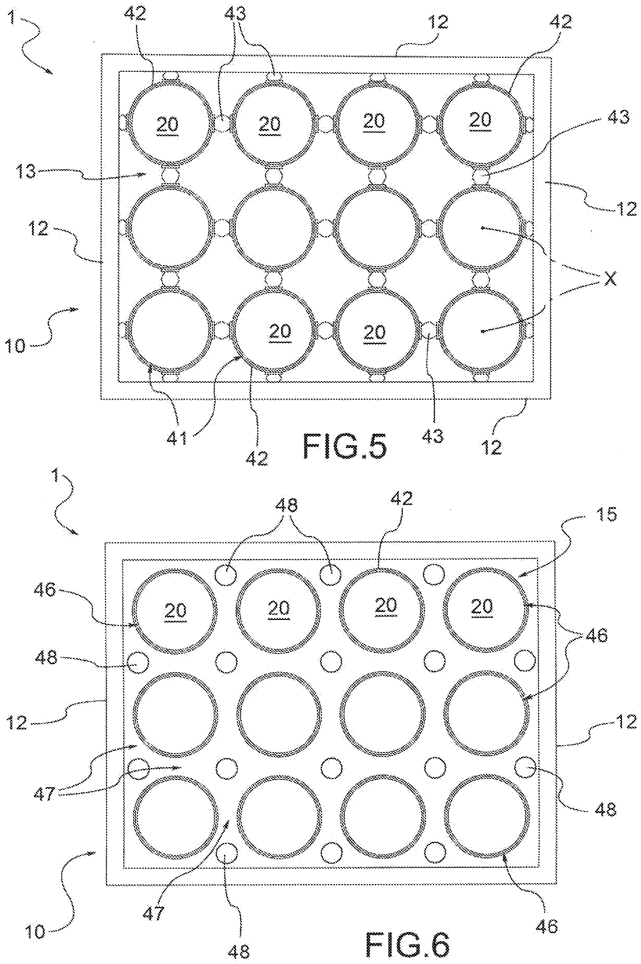

As illustrated in Figures 5 and 9, each spacer element 43 can be constituted by an elastic joint equivalent to a double ball joint.

The elastic joints can be arranged in the points of minimum distance between collar and collar and between collar and frame (as shown in Figure 7), or, alternately, along a diagonal direction of maximum distance between collar and collar and between collar and frame. The latter configuration can be used advantageously in the case in which the space between the cylinders 20 is extremely reduced.

Advantageously, the collars and the spacer elements can be made in one piece with each other to form a single 45 structure made of elastically deformable material.

In particular, as illustrated in Figure 6, this single structure made of elastically deformable material can be constituted by a panel 45, comprising a plurality of main through-openings 46, each of which defines a vertical positioning seat for a cylinder. The edge portion of each main through-opening 46 defines a collar, while the portions of panel 47 arranged between the aforesaid main through-openings 46 constitute the aforesaid spacer elements.

As illustrated in Figure 6, the aforesaid panel 45 can comprise a plurality of secondary through-openings 48, having in particular a lightening function, made in the portions of panel disposed between the aforesaid main openings. The spacer elements are defined by the portions of panel 47 arranged between the main openings 46 and the secondary openings 48.

Advantageously, the aforesaid vertical support structure 40 comprises, for each collar 41, an interposition structure 44 made of elastically deformable material interposed between the collar 41 and the respective cylinder 20. This structure 44 is suitable to allow displacements of the cylinder due to thermal expansion and mechanical deformation of the cylinder itself that occur in cycles of loading and unloading the cylinder. Generally, these displacements are of the order of 20-30 mm.

In particular, this interposition structure 44 is a continuous structure, which extends for the entire perimeter of the cylinder in cross-section, or is a discontinuous structure, consisting of a plurality of elements distributed along the perimetric extension of the cylinder in transverse cross-section, for example in the form of slide blocks.

Advantageously, the elastically deformable material which forms aforesaid interposition structure 44 provides a coefficient of friction with the cylinder 20 sufficiently low as not to hinder the axial translations of the cylinder relative to the collar 42.

This invention also relates to a marine vessel comprising one or more multiple containment units 1 of compressed gas according to this invention, and in particular as described above. Preferably, this marine vessel is a ship or a barge.

Advantageously, the aforesaid one or more multiple containment units (racks) 1 of compressed gas are installed in a hold or on a deck of said marine vessel.

As already said, this invention provides for connecting each single cylinder 20 to the support frame 10 by means of a mechanical connection system that is composed of two separate support systems, one acting on the bottom portion of the cylinders (i.e., the aforesaid lower connection device 30) and one acting on a portion placed higher up with respect to the bottom (i.e., the aforesaid vertical support structure 40).

Thanks to the combined action of these two connection systems 30 and 40, in all the possible mechanical deformations to which the support frame 10 can be subjected, the deformation of the frame 10 does not transmit a bending or twisting moment to the cylinders 20, but only generates a rigid rotation movement of each cylinder around a point of rotation in the space located at the bottom of the cylinder itself. However, this rigid rotation movement in space does not result in any additional structural stress of the cylinders themselves.

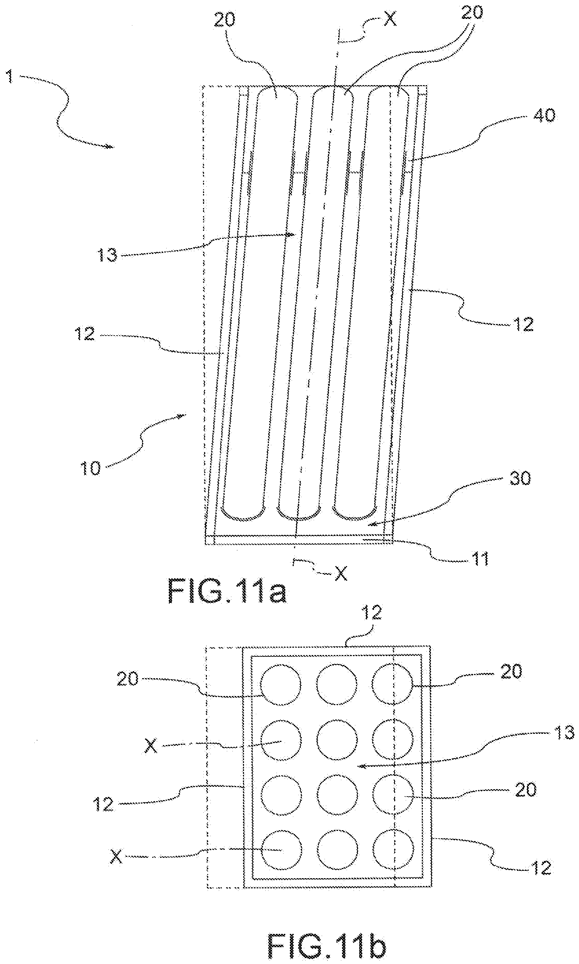

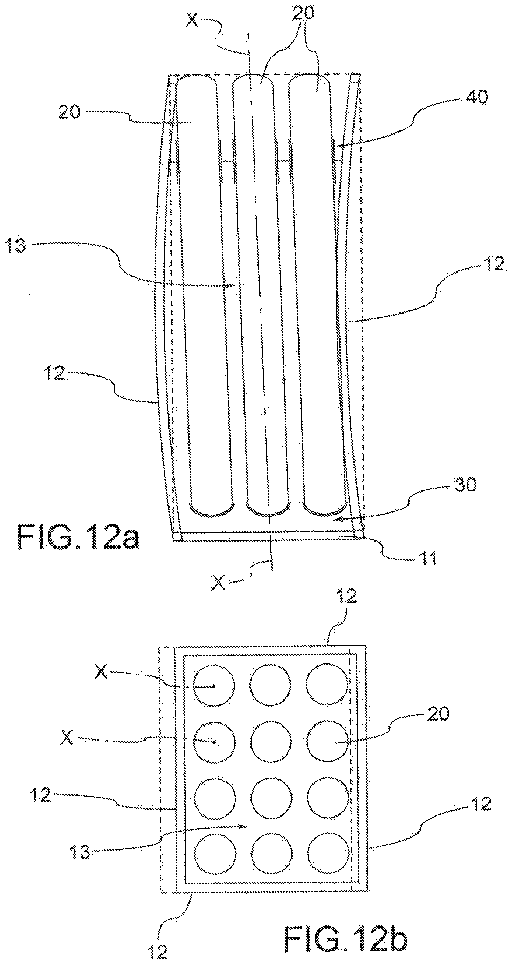

Figures 11a-b, 12 a-b and 13 a-b schematically illustrate some possible states of deformation of the support frame of the containment unit and the position consequently assumed by the cylinders.

In particular, Figures 11 a-b illustrate the effects of a pure translational deformation of the frame. It causes a rigid rotation of all the cylinders, and in particular a rotation of the bottom portion of each cylinder on the plane of the translation and a rotation-translation of the vertical support structure 40.

Figures 12 a-b illustrate the effects of a pure flexional deformation of the frame. It causes a rigid rotation of all the cylinders, and in particular a pure rotation of the bottom portion of each cylinder on the plane of the flexion and a rotation or rotation-translation of the vertical support structure 40.

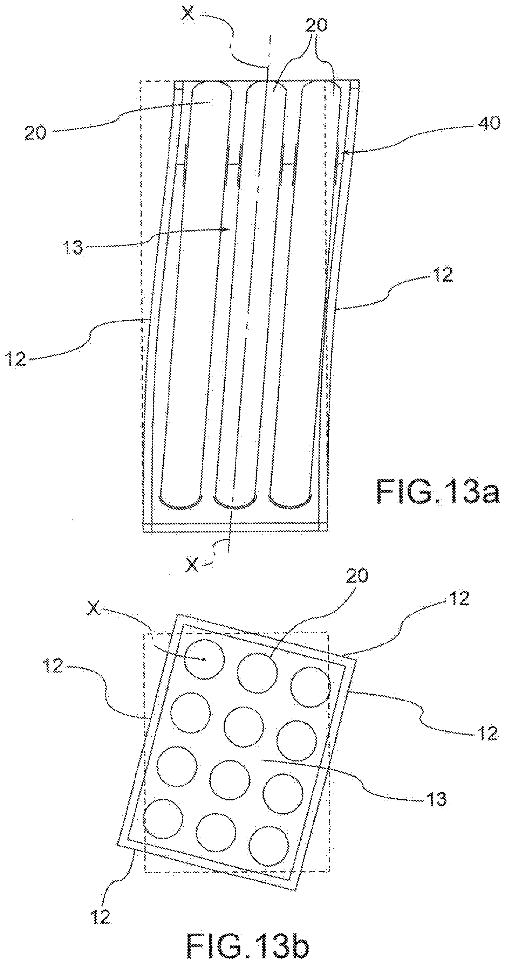

Figures 13 a-b illustrate the effects of a pure torsional deformation of the frame. It causes a rigid rotation of all the cylinders, and in particular a pure rotation of the bottom portion of each cylinder on the plane of the torsion and a torsion-translation of the vertical support structure 40.

Any other type of deformation of the frame 10 is definable as a geometrical combination of the three types of deformation described above. Consequently, the cylinders 20 will be only subjected to corresponding rigid rotations as a combination of single deformations of the frame.

The invention allows obtaining many advantages in part already described.

The multiple containment unit 1 of compressed gas cylinders according to the invention is structured in such a way that the support frame can deform freely even with unfavourable sea and wind conditions, in the case of maritime transport, without any significant effect in terms of deformations on the cylinders, which are free to move relative to the frame.

In the case of maritime transport, the cylinders can thus be dimensioned considering only the cycles of loading/unloading gas (on the order of 10^3 in 20 years) and not the wave load cycles (on the order of 10^6 in 20 years) related to the maximum wave stress sustained by the support frame of the containment unit 1.

The multiple containment unit of compressed gas cylinders according to the invention is also simple and economical to manufacture. In fact, the connection systems of the cylinders to the support frame are constructively simple to make and to assemble, and do not include complex components. They are also of mechanical systems, which intervene mechanically in an automatic way without the need for a control and actuation system.

Therefore, the invention thus conceived achieves the predefined purposes.

Obviously, it may even assume, in its practical embodiment, forms and configurations different from that illustrated above without, for this reason, departing from the present scope of protection as defined by the claims.

Moreover, all the details may be replaced by technically equivalent elements and the dimensions, forms and materials used may be any according to the needs.

## Claims

1. Multiple containment unit of compressed gas cylinders, which is intended to be installed on a transport means, in particular for maritime transport, such unit being installable in the holds of ships or on the decks of barges, such multiple containment unit (1) comprising:
- a support frame (10) comprising in turn a support base (11) and a plurality of side containment structures (12) which are structurally connected to the support base (11) and extend vertically therefrom defining an inner containment volume (13); and
- a plurality of cylinders (20) for containing compressed gas which are arranged vertically along their own longitudinal extension axis (X) inside said containment volume (13) and are connected to said support frame (10) in order to maintain a stable position therein,
**characterised in that** each cylinder (20) is connected to the support base (11) by means of a lower connecting device (30) comprising a support element (31) at which the cylinder (20) abuts with a longitudinal bottom end (21), and a spherical joint (32) which constrains the support element (31) to the support base (11), allowing the free rotation of said support element (31) and of the cylinder (20) resting on it with respect to the support base (11), but preventing translations thereof with respect to said support base (11),
**and in that** it comprises a vertical support structure (40) of the cylinders (20) which is constrained to the side structures (12) of the frame (10) at a predetermined height (H) from the support base (11) and which defines for each individual cylinder (20) a vertical positioning seat (41), each cylinder (20) being free to translate axially within its respective seat (41) with respect to said vertical support structure (40), which accompanies the cylinders (20) in the movements of the side structures (12) of the frame, following the rotations of each cylinder (20) permitted by the respective lower connecting device (30) without transmitting to them bending and/or twisting moments and while keeping the cylinders (20) separate from each other according to a predetermined positioning plan layout,
wherein said support frame (10) is a structure having a stiffness lower than the cylinders arranged in it and is able to deform when it is subjected to dynamic loads imposed by the means of transport inside which it is installed and wherein the support frame (10) is a lattice-like structure made of metal sections connected to each other by welding or bolted connections.

2. Unit according to claim 1, wherein the support element (31) is shaped so as to define a support seat having a shape corresponding to the shape of the bottom end of the cylinder, preferably said support element (31) being composed of a cradle, preferably said support element (31) being made of metal.

3. Unit according to claim 1 or 2, wherein the lower connection device (30) comprises a mattress (33) of elastically deformable material interposed between the support element (31) and the bottom end (21) of the cylinder, said mattress (33) being suitable to dampen possible vibrations and/or vertical stresses transmitted by the frame (10) to the cylinder.

4. Unit according to claim 3, wherein the elastically deformable material which forms the mattress (33) provides a coefficient of friction with the cylinder (20) sufficient to keep the cylinder (20) resting on the support element (31) in the event of vertical and/or side accelerations received by said cylinder.

5. Unit according to one or more of the preceding claims, wherein said vertical support structure (40) comprises:
- a plurality of collars (42), one for each cylinder (20), each of which defines the positioning seat (41) for the respective cylinder (20); and
- a plurality of spacer elements (43) which connect the collars to each other and to the side structures (12) of the frame (10) positioning the collars between them and with respect to the side structures according to a predetermined positioning plan layout.

6. Unit according to claim 5, wherein said spacer elements (43) connect the collars (42) to each other and to the side structures (12) uncoupling the collars from each other and from the side structures as regards the transmission of bending and/or twisting moments.

7. Unit according to claim 5 or 6, wherein each spacer element (43) consists of a double ball joint or of an elastic joint equivalent to a double ball joint.

8. Unit according to claim 5 or 6, wherein said collars and said spacer elements are made in one piece with each other to form a single structure (45) of elastically deformable material.

9. Unit according to claim 8, wherein said single structure of elastically deformable material consists of a panel (45), comprising a plurality of main through apertures (46), each of which defines a vertical positioning seat for a cylinder, the edge portion of each main through-opening (46) defining a collar and the portions of panel (47) positioned between said main through-openings (46) constituting said spacer elements.

10. Unit according to claim 9, wherein said panel comprises a plurality of secondary through apertures (48) made in the portions of panel (47) positioned between said main openings, said spacer elements being defined by portions of panel (47) positioned between the main (46) and secondary openings (48).

11. Unit according to one or more of the claims from 5 to 10, wherein said vertical support structure (40) comprises for each collar (41) an interposition structure (44) made of elastically deformable material interposed between the collar (41) and the respective cylinder (20) suitable to permit shifts of the cylinder due to the thermal expansions and mechanical deformations of said cylinder which occur in the loading and unloading cycles of the cylinder.

12. Unit according to claim 11, wherein said interposition structure (44) is a continuous structure, which extends for the entire perimeter of the cylinder in transverse cross-section, or a discontinuous structure, consisting of a plurality of elements distributed along the perimetric extension of the cylinder in transverse cross section.

13. Unit according to claim 11 or 12, wherein the elastically deformable material which forms said interposition structure (44) provides a coefficient of friction with the cylinder (20) sufficiently low as not to hinder the axial translations of the cylinder relative to the collar (42).

14. Unit according to one or more of the preceding claims, wherein said support frame (10) comprises means for connection to a structure of said transport means.

15. Marine vessel comprising one or more multiple, compressed gas containment units according to one or more of the preceding claims, said marine vessel being a ship or a barge.

16. Marine vessel according to claim 15, wherein said one or more multiple containment units of compressed gas are installed in a hold or on a deck of said marine vessel.

## Patentansprüche

1. Mehrfacheinschlusseinheit für Druckgaszylinder, welche dafür vorgesehen ist, an einem Transportmittel, insbesondere für einen Seetransport, installiert zu sein, wobei eine derartige Einheit in den Frachträumen von Schiffen oder auf den Decks von Frachtkähnen installierbar ist, wobei eine derartige Mehrfacheinschlusseinheit (1) umfasst:
- einen Halterungsrahmen (10), welcher wiederum eine Halterungsbasis (11) und eine Mehrzahl von Seiteneinschlussstrukturen (12) umfasst, welche strukturell mit der Halterungsbasis (11) verbunden sind und sich vertikal davon erstrecken, wobei sie ein inneres Einschlussvolumen (13) definieren; und
- eine Mehrzahl von Zylindern (20) zum Einschließen von Druckgas, welche vertikal entlang ihrer eigenen longitudinalen Erstreckungsachse (X) innerhalb des Einschlussvolumens (13) angeordnet sind und mit dem Halterungsrahmen (10) derart verbunden sind, dass sie eine stabile Position darin beibehalten,
**dadurch gekennzeichnet, dass** jeder Zylinder (20) mittels einer unteren Verbindungsvorrichtung (30), welche ein Halterungselement (31) umfasst, an welchem der Zylinder (20) mit einem longitudinalen Bodenende (21) anliegt, und eines sphärischen Gelenks (32), welches das Halterungselement (31) an der Halterungsbasis (11) hält, wobei die freie Drehung des Halterungselements (31) und des auf ihm aufliegenden Zylinders (20) in Bezug auf die Halterungsbasis (11) ermöglicht ist, aber Verschiebungen davon in Bezug auf die Halterungsbasis (11) verhindert sind, mit der Halterungsbasis (11) verbunden ist
**und dass** sie eine vertikale Halterungsstruktur (40) der Zylinder (20) umfasst, welche in einer vorbestimmten Höhe (H) von der Halterungsbasis (11) an den Seitenstrukturen (12) des Rahmens (10) gehalten ist und welche für jeden einzelnen Zylinder (20) einen vertikalen Positionierungssitz (41) definiert, wobei sich jeder Zylinder (20) axial innerhalb seines jeweiligen Sitzes (41) in Bezug auf die vertikale Halterungsstruktur (40) frei verschieben kann, welche die Zylinder (20) in den Bewegungen der Seitenstrukturen (12) des Rahmens begleitet, wobei sie den Drehungen jedes Zylinders (20) folgt, welche durch die jeweilige untere Verbindungsvorrichtung (30) erlaubt sind, ohne Biege- und/oder Torsionsmomente auf diese zu übertragen, und während sie die Zylinder (20) gemäß einem vorbestimmten Positionierungslageplan voneinander getrennt hält,
wobei der Halterungsrahmen (10) eine Struktur ist, welche eine niedrigere Steifigkeit als die in ihr angeordneten Zylinder aufweist und dazu in der Lage ist, sich zu verformen, wenn sie dynamischen Lasten ausgesetzt ist, welche durch das Transportmittel auferlegt sind, in welchem sie installiert ist, und wobei die Halterungsstruktur (10) eine gitterartige Struktur ist, welche aus Metallabschnitten hergestellt ist, welche durch Schweißen oder durch Schraubverbindungen miteinander verbunden sind.

2. Einheit nach Anspruch 1, wobei das Halterungselement (31) derart geformt ist, dass es einen Halterungssitz definiert, welcher eine Form aufweist, welche der Form des Bodenendes des Zylinders entspricht, wobei vorzugsweise das Halterungselement (31) aus einer Wiege besteht, wobei vorzugsweise das Halterungselement (31) aus einem Metall hergestellt ist.

3. Einheit nach Anspruch 1 oder 2, wobei die untere Verbindungsvorrichtung (30) eine Matte (33) aus einem elastisch verformbaren Material umfasst, welche zwischen das Halterungselement (31) und das Bodenende (21) des Zylinders eingefügt ist, wobei die Matte (33) dazu geeignet ist, mögliche Vibrationen und/oder vertikale Belastungen, welche durch den Rahmen (10) auf den Zylinder übertragen werden, zu dämpfen.

4. Einheit nach Anspruch 3, wobei das elastisch verformbare Material, welches die Matte (33) bildet, einen Reibungskoeffizienten mit dem Zylinder (20) bereitstellt, welcher ausreicht, um den Zylinder (20) in dem Fall vertikaler und/oder seitlicher Beschleunigungen, welche durch den Zylinder aufgenommen werden, auf dem Halterungselement (31) aufliegend zu halten.

5. Einheit nach einem oder mehreren der vorhergehenden Ansprüche, wobei die vertikale Halterungsstruktur (40) umfasst:
- eine Mehrzahl von Krägen (42), einer für jeden Zylinder (20), von welchen jeder den Positionierungssitz (41) für den jeweiligen Zylinder (20) definiert; und
- eine Mehrzahl von Abstandselementen (43), welche die Krägen miteinander und mit den Seitenstrukturen (12) des Rahmens (10) verbinden, wobei sie die Krägen zwischen diesen und in Bezug auf die Seitenstrukturen gemäß einem vorbestimmten Positionierungslageplan positionieren.

6. Einheit nach Anspruch 5, wobei die Abstandselemente (43) die Krägen (42) miteinander und mit den Seitenstrukturen (12) verbinden, wobei sie im Hinblick auf die Übertragung von Biege- und/oder Torsionsmomenten die Krägen voneinander und von den Seitenstrukturen entkoppeln.

7. Einheit nach Anspruch 5 oder 6, wobei jedes Abstandselement (43) aus einem doppelten Kugelgelenk oder aus einem zu einem doppelten Kugelgelenk äquivalenten elastischen Gelenk besteht.

8. Einheit nach Anspruch 5 oder 6, wobei die Krägen und die Abstandselemente miteinander derart aus einem Stück hergestellt sind, dass sie eine einzelne Struktur (45) aus einem elastisch verformbaren Material bilden.

9. Einheit nach Anspruch 8, wobei die einzelne Struktur aus einem elastisch verformbaren Material aus einem Paneel (45) besteht, welches eine Mehrzahl von Hauptdurchgangsaperturen (46) umfasst, von welchen jede einen vertikalen Positionierungssitz für einen Zylinder definiert, wobei der Randabschnitt jeder Hauptdurchgangsöffnung (46) einen Kragen definiert und die Abschnitte des Paneels (47), welche zwischen den Hauptdurchgangsöffnungen (46) positioniert sind, die Abstandselemente ausmachen.

10. Einheit nach Anspruch 9, wobei das Paneel eine Mehrzahl von Sekundärdurchgangsaperturen (48) umfasst, welche in den Abschnitten des Paneels (47) geschaffen sind, welche zwischen den Hauptöffnungen positioniert sind, wobei die Abstandselemente durch Abschnitte des Paneels (47) definiert sind, welche zwischen den Haupt- (46) und den Sekundäröffnungen (48) positioniert sind.

11. Einheit nach einem oder mehreren der Ansprüche 5 bis 10, wobei die vertikale Halterungsstruktur (40) für jeden Kragen (41) eine aus einem elastisch verformbaren Material hergestellte Zwischenstruktur (44) umfasst, welche zwischen dem Kragen (41) und dem jeweiligen Zylinder (20) eingefügt ist, welche dazu geeignet ist, Verlagerungen des Zylinders aufgrund der thermischen Ausdehnungen und der mechanischen Verformungen des Zylinders zu erlauben, welche in den Lade- und Entladezyklen des Zylinders auftreten.

12. Einheit nach Anspruch 11, wobei die Zwischenstruktur (44) eine kontinuierliche Struktur, welche sich im Querschnitt über den gesamten Umfang des Zylinders erstreckt, oder eine diskontinuierliche Struktur ist, welche aus einer Mehrzahl von Elementen besteht, welche im Querschnitt entlang der Umfangserstreckung des Zylinders verteilt sind.

13. Einheit nach Anspruch 11 oder 12, wobei das elastisch verformbare Material, welches die Zwischenstruktur (44) bildet, einen Reibungskoeffizienten mit dem Zylinder (20) bereitstellt, welcher ausreichend niedrig ist, um die axialen Verschiebungen des Zylinders bezüglich des Kragens (42) nicht zu behindern.

14. Einheit nach einem oder mehreren der vorhergehenden Ansprüche, wobei der Halterungsrahmen (10) Mittel zur Verbindung mit einer Struktur des Transportmittels umfasst.

15. Wasserfahrzeug, umfassend eine oder mehrere Mehrfachdruckgaseinschlusseinheiten nach einem oder mehreren der vorhergehenden Ansprüche, wobei das Wasserfahrzeug ein Schiff oder ein Frachtkahn ist.

16. Wasserfahrzeug nach Anspruch 15, wobei die eine oder die mehreren Mehrfacheinschlusseinheiten für Druckgas in einem Frachtraum oder auf einem Deck des Wasserfahrzeugs installiert sind.

## Revendications

1. Unité de confinement multiple de bouteilles de gaz comprimé, qui est destinée à être installée sur un moyen de transport, en particulier pour un transport maritime, une telle unité pouvant être installée dans les cales de bateaux ou sur les ponts de barges, une telle unité de confinement multiple (1) comprenant :
- un cadre de support (10) comprenant, à son tour, une base de support (11) et une pluralité de structures de confinement latérales (12) qui sont reliées de manière structurale à la base de support (11) et s'étendent verticalement depuis celle-ci définissant un volume de confinement interne (13) ; et
- une pluralité de bouteilles (20) pour contenir du gaz comprimé qui sont agencées verticalement le long de leur propre axe d'extension longitudinale (X) dans ledit volume de confinement (13) et sont reliées audit cadre de support (10) afin de maintenir une position stable dans celui-ci,
**caractérisée en ce que** chaque bouteille (20) est reliée à la base de support (11) au moyen d'un dispositif de liaison inférieur (30) comprenant un élément support (31) au niveau duquel la bouteille (20) vient en butée avec une extrémité de fond longitudinal (21), et d'un joint sphérique (32) qui contraint l'élément support (31) à la base de support (11), permettant la rotation libre dudit élément support (31) et de la bouteille (20) reposant sur celui-ci par rapport à la base de support (11), mais empêchant des mouvements de translation de celui-ci par rapport à ladite base de support (11),
et **en ce qu'**elle comprend une structure de support verticale (40) des bouteilles (20) qui est contrainte aux structures latérales (12) du cadre (10) à une hauteur prédéterminée (H) de la base de support (11) et qui définit pour chaque bouteille individuelle (20) un siège de positionnement vertical (41), chaque bouteille (20) étant libre d'effectuer un mouvement de translation axiale à l'intérieur de son siège respectif (41) par rapport à ladite structure de support verticale (40), qui accompagne les bouteilles (20) dans les mouvements des structures latérales (12) du cadre, suivant les rotations de chaque bouteille (20) permises par le dispositif de liaison inférieur respectif (30) sans leur transmettre des moments de flexion et/ou torsion et tout en gardant les bouteilles (20) séparées les unes des autres en fonction d'une configuration de positionnement prédéterminée,
dans laquelle ledit cadre de support (10) est une structure ayant une rigidité inférieure aux bouteilles agencées dans celui-ci et est apte à se déformer lorsqu'il est soumis à des charges dynamiques imposées par le moyen de transport dans lequel il est installé et dans laquelle le cadre de support (10) est une structure en treillis faite de sections métalliques liées les unes aux autres par soudage ou raccordements boulonnés.

2. Unité selon la revendication 1, dans laquelle l'élément support (31) est façonné de manière à définir un siège de support ayant une forme correspondant à la forme de l'extrémité de fond de la bouteille, de préférence ledit élément support (31) étant composé d'un socle, de préférence ledit élément support (31) étant fait de métal.

3. Unité selon la revendication 1 ou 2, dans laquelle le dispositif de liaison inférieur (30) comprend un matelas (33) d'un matériau élastiquement déformable intercalé entre l'élément support (31) et l'extrémité de fond (21) de la bouteille, ledit matelas (33) étant approprié pour amortir de possibles vibrations et/ou contraintes verticales transmises par le cadre (10) à la bouteille.

4. Unité selon la revendication 3, dans laquelle le matériau élastiquement déformable qui forme le matelas (33) fournit un coefficient de friction avec la bouteille (20) suffisant pour garder la bouteille (20) posée sur l'élément support (31) en cas d'accélérations verticales et/ou latérales reçues par ladite bouteille.

5. Unité selon une ou plusieurs des revendications précédentes, dans laquelle la structure de support verticale (40) comprend :
- une pluralité de colliers (42), un pour chaque bouteille (20), chacun desquels définit le siège de positionnement (41) pour la bouteille respective (20) ; et
- une pluralité d'éléments d'espacement (43) qui relient les colliers les uns aux autres et aux structures latérales (12) du cadre (10) en positionnant les colliers entre eux et par rapport aux structures latérales conformément à la configuration de positionnement prédéterminée.

6. Unité selon la revendication 5, dans laquelle lesdits éléments d'espacement (43) relient les colliers (42) les uns aux autres et aux structures latérales (12) en découplant les colliers les uns des autres et des structures latérales en ce qui concerne la transmission de moments de flexion et/ou torsion.

7. Unité selon la revendication 5 ou 6, dans laquelle chaque élément d'espacement (43) est constitué d'un joint à rotule double ou d'un joint élastique équivalent à un joint à rotule double.

8. Unité selon la revendication 5 ou 6, dans laquelle lesdits colliers et lesdits éléments d'espacement sont réalisés en une seule pièce conjointement pour former une structure unique (45) d'un matériau élastiquement déformable.

9. Unité selon la revendication 8, dans laquelle ladite structure unique d'un matériau élastiquement déformable est constituée d'un panneau (45), comprenant une pluralité d'ouvertures traversantes principales (46), chacune desquelles définit un siège de positionnement vertical pour une bouteille, la partie de bord de chaque ouverture traversante principale (46) définissant un collier et les parties de panneau (47) positionnées entre lesdites ouvertures traversantes principales (46) constituant lesdits éléments d'espacement.

10. Unité selon la revendication 9, dans laquelle ledit panneau comprend une pluralité d'ouvertures traversantes secondaires (48) créées dans les parties de panneau (47) positionnées entre lesdites ouvertures principales, lesdits éléments d'espacement étant définis par des parties de panneau (47) positionnées entre les ouvertures principales (46) et secondaires (48).

11. Unité selon une ou plusieurs des revendications 5 à 10, dans laquelle ladite structure de support verticale (40) comprend pour chaque collier (41) une structure intercalaire (44) faite en matériau élastiquement déformable intercalé entre le collier (41) et la bouteille respective (20) appropriée pour permettre des décalages de la bouteille en raison des dilatations thermiques et des déformations mécaniques de ladite bouteille qui se produisent pendant les cycles de chargement et de déchargement de la bouteille.

12. Unité selon la revendication 11, dans laquelle ladite structure intercalaire (44) est une structure continue, qui s'étend sur tout le périmètre de la bouteille en section transversale, ou une structure discontinue, constituée d'une pluralité d'éléments répartis sur l'extension périphérique de la bouteille en section transversale.

13. Unité selon la revendication 11 ou 12, dans laquelle le matériau élastiquement déformable qui forme ladite structure intercalaire (44) fournit un coefficient de friction avec la bouteille (20) suffisamment bas pour ne pas gêner les mouvements de translation axiale de la bouteille par rapport aux colliers (42).

14. Unité selon une ou plusieurs des revendications précédentes, dans laquelle ledit cadre de support (10) comprend des moyens de liaison à une structure dudit moyen de transport.

15. Navire maritime comprenant une ou plusieurs unités de confinement de gaz comprimé multiples selon une ou plusieurs des revendications précédentes, ledit navire maritime étant un bateau ou une barge.

16. Navire maritime selon la revendication 15, dans lequel lesdites une ou plusieurs unités de confinement multiples de gaz comprimé sont installées dans une cale ou sur un pont dudit navire maritime.
